# EUROPÄISCHE PATENTSCHRIFT

(11) **EP 1 273 560 B1**
(45) Veröffentlichungstag und Bekanntmachung des Hinweises auf die Patenterteilung: **16.02.2005**
(21) Anmeldenummer: 02013015.9
(22) Anmeldetag: 12.06.2002
(51) Int. Cl.: E02D 17/13, C04B 28/02

(54) **Baustoffgemenge für einen Baugrubenverbau, sowie Baugrubenverbau hieraus**
Material for manufacturing an excavation and resultant excavation
Matériaux pour fabriquer une excavation et excavation résultante

(30) Priorität: 06.07.2001 DE 10132818
(43) Veröffentlichungstag der Anmeldung: 08.01.2003
(73) Patentinhaber: DYCKERHOFF AKTIENGESELLSCHAFT, D-65203 Wiesbaden (DE)
(72) Erfinder: Deuse, Thomas, 63075 Offenbach (DE); Kühner, Ulrich, 64625 Bensheim (DE); Plack, Heiko, Dr., 49459 Ladbergen (DE); Schneider, Günter, 65375 Oestrich (DE)
(74) Vertreter: Solf, Alexander, Dr.

(56) Entgegenhaltungen:
- EP-A- 0 012 546
- EP-A- 0 199 070
- DE-A- 19 526 396
- DE-C- 934 790
- GB-A- 1 404 001
- US-A- 5 852 077
- CHEMICAL ABSTRACTS + INDEXES, AMERICAN CHEMICAL SOCIETY. COLUMBUS, US, 29. Juli 1985 (1985-07-29), XP000184094 ISSN: 0009-2258
- CHEMICAL ABSTRACTS + INDEXES, AMERICAN CHEMICAL SOCIETY. COLUMBUS, US, 6. Mai 1991 (1991-05-06), XP000189886 ISSN: 0009-2258

## Beschreibung

Die Erfindung betrifft die Verwendung von Holzfasern ein Baustoffgemenge für einen Baugrubenverbau zur Baugrubensicherung im Grundwasserbereich und oberhalb des Grundwasserspiegels, sowie einen Baugrubenverbau hieraus.

Derzeit sind - neben anderen Techniken, z. B. Bohrpfahlwand-Verbau - vier grundsätzlich unterschiedliche Baugrubenverbaue bekannt, nämlich der Spundwandverbau, Trägerbohlwandverbau, Schlitzwandverbau und Kombinationen dieser Verbaue.

In diesem Zusammenhang ist versucht worden, bei der Erstellung von Baugrubenverbauen Dichtwände im Einphasen-Schlitzwandverfahren niederzubringen, in die dann tragende Elemente wie z. B. Doppel-T-Profilträger senkrecht eingestellt wurden, dabei fungierte die Schlitzwandmasse, u. a. als Zwischenraumfüllung. Als Baustoff wurde eine konventionelle Einphasen-Dichtwandmischung z. B. in Form einer Fertig-Trockenmischung verwendet.

Nach der Erstellung der Schlitzwand z. B. bis unterhalb der Baugrubensohle und nach Aushärtung des Baustoffs wurde die Baugrube ausgehoben, wobei die Schlitzwand baugrubenseitig bzw. an der Luftseite oberflächlich freigelegt wurde. Die Einphasenmasse sollte die Abdichtung der Baugrube gegen Eindringen von Wasser gewährleisten. Die aus dem Wasser- und Erddruck resultierenden Kräfte sollten von den tragenden Elementen, z. B. den Doppel-T-Profilträgern, und der als Ausfachung wirkenden Einphasenmasse sowie gegebenenfalls von weiteren Aussteifungselementen oder Verpreßankern oder anderen Bewehrungselementen übernommen werden.

Die Anwendung dieser bekannten Baugrubenverbau-Kombination beinhaltet den Vorteil, dass sie erschütterungsfrei und mit relativ einfachen Mitteln und mit wenigen Maschinen platzsparend erstellt werden kann. Es hat sich aber herausgestellt, dass die tragenden Eigenschaften der Einphasenmasse nicht ausreichend sind und die dichtenden und tragenden Eigenschaften der Einphasenmasse relativ schnell während der Bauphase verloren gehen. Es tritt unkontrollierbar Rissbildung und/oder Materialabrieselung bis zum Einsturz einer Wand in der Regel in einem Zeitraum auf, in dem das Bauwerk noch nicht fertiggestellt ist und die Baugrubenwandung ihre volle Funktion erfüllen muss. Aus diesem Grund konnte das bekannte Kombinationsverfahren - obwohl es allen anderen sowohl herstellungstechnisch als auch kostenmäßig überlegen ist - praktisch nicht eingeführt werden.

Aus der AT 394 037 B ist ein Verfahren zur Herstellung einer Dichtungsschicht bekannt. Eine derartige Dichtungsschicht soll insbesondere horizontal, vertikal oder geneigt angeordnet sein und insbesondere zur Sicherung bzw. Ummantelung von Deponien dienen. Zur Erhöhung der Undurchlässigkeit der Dichtungsschicht gegenüber umweltrelevanten Flüssigkeiten wird vorgeschlagen, mineralische Zusätze, insbesondere auch Strukturmaterialien wie Zeolithe, zu verwenden, wobei diese Strukturmaterialien bezüglich ihrer Feinheit oder Beschaffenheit nicht weiter spezifiziert werden. Aus US 5852077 ist eine wasserdichte Zementschlämme auf Basis von Portlandzement, einer puzzolanische Komponente, Bentonit sowie Sägemehl bekannt.

Aus der DE 195 26 396 C2 ist eine Einphasen-Schlitzwandmasse bekannt, die einen körnigen, wasserspeichernden Leichtzuschlagstoff enthält, der in der Erhärtungsphase des Baustoffs, in der der Baustoff Wasser chemisch und adsorptiv bindet, zusätzliches Wasser zurückhalten und langfristig speichern soll, so dass der Baustoff nach dem Baugrubenaushub insbesondere auch an der freigelegten Schlitzwandoberfläche aufgrund des im Inneren der Masse gespeicherten Wassers stabil bleibt. Der Leichtzuschlagstoff soll zudem die Elastizität des Wandmaterials erhöhen. Insbesondere soll der Leichtzuschlagstoff ein poröser, körniger, wasserspeichernder Leichtzuschlagstoff sein. Obwohl körnige, wasserdurchlässige Leichtzuschlagstoffe verwendet werden ist die Masse in feuchtem Zustand relativ dicht. Offenbar dringt feinteilige Schlitzwandmasse in die Poren der Leichtzuschlagstoffkörner ein, woraus eine Art Verankerung resultiert, die dem Wasser Wege versperrt und auch die Schubfestigkeit der Masse und damit ihre tragende Wirkung erhöht. Diese Masse hat sich im Prinzip bewährt, wobei jedoch eine relativ große Menge an teuren Leichtzuschlagstoffen verwendet werden muss. In dieser Druckschrift ist die Verwendung von Papierfasern als Bestandteil der Mischung erwähnt, Papierfasern sind aufgrund der Aufbereitung jedoch eher fest zusammenhängende Faserkonglomerate bzw kleine Papierfetzen mit einer schlechten Dispergierbarkeit, wobei die Faserkonglomerate sich nicht auflösen.

In der Praxis wird zwischen sogenannten hochgefüllten und niedriggefüllten Massen unterschieden. Diese Bezeichnungen beziehen sich auf den Feststoffanteil in der Masse bzw. in der Suspension. Die Grenze liegt hierbei etwa bei 400 kg Feststoff/m³ Suspension, darunter sind die Massen niedriggefüllt, darüber hochgefüllt.

Aufgabe der Erfindung ist es, ein Baustoffgemenge für eine Einphasenschlitzwand zu schaffen, das eine verbesserte Standfestigkeit, Dichtheit und eine höhere Lebensdauer der Schlitzwand nach dem Aushub der Baugrube und ihrer baugrubenseitigen oberflächlichen Freilegung gewährleistet.

Diese Aufgabe wird durch die Merkmale des Anspruchs 1 gelöst. Vorteilhafte Weiterbildungen der Erfindung werden in den Unteransprüchen gekennzeichnet.

Nach der Erfindung wird ein Baustoffgemenge bereitgestellt, dass eine insbesondere niedriggefüllte Einphasen-Schlitzwandmasse mit einem erheblich verbesserten Wasserhaushalt ergibt, ohne dass die rheologischen Eigenschaften unkontrolliert schwanken. Hierbei werden Holz- bzw. Zellulosefasern verwendet, die, während die mineralischen Bestandteile des Baustoffs Wasser chemisch und adsorptiv binden, zusätzliches Wasser an und in ihrer Struktur einbauen, dort zurückhalten und langfristig speichern, so dass der Baustoff nach dem Baugrubenaushub insbesondere auch an der freigelegten Schlitzwandoberfläche aufgrund des im Inneren der Masse gespeicherten Wassers nahezu unverändert bleibt. Die speziellen Fasern erhöhen zudem die Elastizität des Wandmaterials und wirken einer Rissbildung entgegen. Dies wird auch darauf zurückgeführt, dass die Fasern durch die Wasseraufnahme quellen uns so eine Druckkraft aufbringen und die Masse kompaktieren. Es konnte ferner festgestellt werde, dass eine erfindungsgemäße Masse weniger schnell austrocknet als bekannte Massen, wobei auch bei extremen klimatischen Schwankungen eine relativ geringe Schwankung der Feuchtigkeit der Wand zu beobachten ist. Ferner weist die Wand auch im Querschnitt gesehen ein relativ geringes Feuchtigkeitsgefälle von der erdbodenseitigen Fläche zur baugrubenseitigen Fläche auf. Dies wird darauf zurückgeführt, dass das erfindungsgemäße Baustoffgemenge in verbesserter Art und Weise Feuchtigkeit aus dem umgebenden Boden entnehmen und unter gleichmäßiger Verteilung im Baustoff speichern kann.

An sich bekannte Verwendungen von faserförmigen Zuschlagstoffen mit vernetzender und/oder wasseraufnehmender Wirkung in mineralischen Baustoffen beziehen sich auf gebrauchsfertige Suspensionen oder Dispersionen mit vergleichsweise geringe Wasser-Feststoff-Verhältnissen < 0,5. Beim erfindungsgemäßen Baustoffgemenge handelt es sich um wasserreiche Bindemittelsuspensionen mit Wasser-Feststoff-Verhältnissen > 2,0 und in der Regel mit Suspensionsdichten < 1,4 kg/l, die vorzugsweise für Dichtungsschlitzwände nach dem Einphasenverfahren Anwendung finden.

Die Einzelfasern der faserförmige Stoffe in Sinne der Erfindung sind nicht länger als 10 mm, vorzugsweise zwischen 0,2 und 0,8 mm.

Überraschenderweise wurde festgestellt, dass vernetzende und/oder wasseraufnehmende Fasern in wirtschaftlichen Mengen auch in stark wasserreichen Schlitzwandsuspensionen mit Wasser-Feststoff-Verhältnissen > 2,0 eine wasseraufnehmende und -rückhaltende Wirkung entwickeln, ohne dass die Wirkung enthaltender Tonmehle, insbesondere Na-Bentonite, auf die Rheologie, das Filtrationsverhalten und die Stabilität der Suspension negativ beeinflusst werden.

Das erfindungsgemäße Baustoffgemenge wird in an sich bekannter Weise mit Wasser zu einer Schlitzwandmasse bzw. Suspension angemacht und anschließend in einen nach bekannten Schlitzwandverfahren hergestellten Schlitz eingefüllt, wobei als stützende und nach der Erhärtung tragende Einphasenmasse die erfindungsgemäße Masse den Erd- und Wasserdruck übernehmen kann, insbesondere in Kombination mit anderen tragenden Elementen. Es handelt sich bei diesen Suspensionen bzw. Massen insbesondere um sogenannte niedriggefüllte Massen. Überraschend ist, dass bei niedrig gefüllten Suspensionen schon sehr niedrige Zugabemengen der Fasern um 1-% zu der oben beschriebenen Wirkung führen.

In einer Ausführungsform des des Baugrubenverbaus werden die Kräfte des Wasser- und Erddrucks von zusätzlichen tragenden Elementen, z. B. Doppel-T-Profilträgern und der Ausfachung dazwischen, nämlich der erhärteten Einphasenmasse übernommen. Gegebenenfalls können zudem weitere Aussteifungselemente wie Gurte, Streifen und/oder Verpressanker verwendet werden. Möglich ist auch, Bewehrungselemente, wie Bewehrungskörbe oder dergleichen einzubringen.

Ein besonders geeignetes Baustoffgemenge für die Einphasenmasse weist unter anderem die folgenden Komponenten auf:
- Zement (Portlandzement, Hochofenzement oder dergleichen),
- gemahlenen Hüttensand,
- ggf. Gesteinsmehl,
- Tonkomponenten (Bentonit, kaolinitische Tone oder dergleichen),
- Holz- oder Zellulosefasern
- ggf. Zusatzmittel und Zusatzstoffe

Diese Bestandteile sind vorzugsweise in den folgenden Mengen enthalten, wobei die Angaben in Massenprozenten [M%] gemacht sind:
- Zement: 10 bis 30, vorzugsweise 15 bis 20 M-%,
- gemahlener Hüttensand: 40 bis 80, vorzugsweise 50 bis 75 M-%,
- ggf. Gesteinsmehl: 5 bis 20, vorzugsweise 10 bis 15 M-%,
- Tonkomponenten: 2 bis 25, vorzugsweise 3 bis 22 M-%,
- Zellulose- bzw. Holzfasern: 0,2 bis 6, vorzugsweise 0,5 bis 1,5 M-%

In Kombination mit den enthaltenen Holz- oder Zellulosefasern kann der stützenden, noch nicht erhärteten Einphasenmasse mindestens ein anorganisches, hygroskopisch wirkendes Zusatzmittel oder mindestens ein anorganisches Zusatzmittel zugesetzt werden, das hygroskopische Mittel in der Einphasenmasse bildet, so dass die Wasserretention weiter erhöht wird. Beispielsweise ist in diesem Zusammenhang vorteilhaft, in der letzten Phase des Aushubs z. B. mit dem Greifer das Mittel in die stützende Einphasenmasse einzuführen und mit dem Greifer mit der Einphasenmasse zu vermischen. Verwendbar ist z. B. Magnesiumchlorid in Mengen von 0.01 bis 5 Masseprozenten. Das Magnesiumchlorid beschleunigt die Erhärtung der Einphasenmasse und wirkt in der erhärteten Masse hygroskopisch. Ebenso verwendbar sind Natriumchlorid plus Calciumhydroxid. Diese Substanzen bilden in der Einphasenmasse Calciumchlorid, das stark hygroskopisch wirkt.

Die anorganischen Zusatzmittel werden in Mengen von 0,01 bis 10 Masseprozent, insbesondere in Mengen von 0,05 bis 2M-%zugesetzt.

In Kombination oder alternativ zu den beschriebenen anorganischen Zusatzmitteln können auch organische Zusatzmittel zur Erhöhung des Wasserrückhaltevermögens der Einphasenmasse wie z. B. Celluloseether in Mengen von 0,01 bis 0,2, vorzugsweise von 0,05 bis 0,1 beigegeben werden. Sofern die hygroskopisch wirkenden Mittel die Erhärtung der Einphasenmasse beeinflussen, ist es zweckmäßig, die Mittel erst - wie oben beschrieben - in der letzten Phase des Aushubs einzuführen. Wenn die Mittel, wie z. B. Methylcellulose auf die Erhärtung der Einphasenmasse keine Einwirkung haben, können die Mittel bereits Bestandteil einer zur Herstellung der Einphasenmasse verwendbaren Trockenmischung oder einer bereits angemachten Einphasensuspension sein.

Zusätzlich können andere bekannte anorganische oder organische Zusatzmittel zur Beeinflussung der Viskosität oder der Festeigenschaften und des Erhärtungsverlaufs, vorzugsweise in trockener Form in dem Baustoffgemenge vorhanden sein.

Als verflüssigende organische oder anorganische Zusatzmittel sind z. B. Ligninsulfonate, Polynaphtalinsulfonate, Polymelaminsulfonate, Zuckerderivate, Hydroxicarboxylsäuren oder Polyacrylsäuren enthalten.

Als erhärtungsverzögernde organische oder anorganische Zusatzmittel sind, z. B. Ligninsulfonate, Zuckerderivate, Zellulosederivate, Hydroxicarboxylsäuren, Salze der Bor-, Phosphor- und Salzsäure oder bestimmte Metalloxide geeignet.

Als erhärtungsbeschleunigende organische oder anorganische Zusatzmittel können z. B. Salze der Schwefel-, Salz-, Kohlenund Kieselsäure, Salze der Ameisensäure, Oxalsäure, alkalische Basen oder bestimmte Amine verwendet werden.

Ferner können Mittel zur Verringerung des Filtratverlustes enthalten sein, wie z. B. Latex, Zellulosederivate, Polyacrylamidderivate, Alkalisalze, Alkalisilikate, Polyvinylalkohol, Polyethylenamine, Polynaphtalinsulfonate oder Zuckerderivate.

Darüberhinaus können auch suspensionsstabilisierende organische oder anorganische Zusatzmittel enthalten sein, wie z. B. Tonmehle, Alkalisilikate, amorphe und kristalline Quarzmehle/stäube, Perlite, Kohlenstaub, Flugasche und Elektrofilterstäube, gemahlene natürliche Puzzolane, Prozeßstäube und Zellulosederivate.

Herkömmliche Baustoffgemenge haben beispielsweise einen Feststoffgehalt von 600 kg/m³, wobei Mischungen mit den relativ teuren mineralischen Leichtzuschlagstoffen mit einem Feststoffgehalt von 600 kg/m³ aus wirtschaftlicher Sicht nur begrenzte Anwendungsmöglichkeiten haben. Bei Schlitzwandmassen werden häufig die Rheologie-Kennwerte deutlich von den Tonkomponenten beeinflusst. Die Zugabe von faserförmiger Zusätzen mit vernetzender Wirkung in den nach der vorliegenden Erfindung eingesetzten Mengen erschwert oder verhindert nicht die Einstellung der Rheologie-Kennwerte bei der Herstellung der erfindungsgemäßen Schlitzwandmassen. Eine Überlagerung der rheologischen Wirkung der Tonkomponenten einerseits und der Fasern andererseits ist gut beherrschbar.

Für einen Vergleich wurden erfindungsgemäße Mischungen im Vergleich zu Mischungen ohne Faser- oder mineralische Leichtzuschläge gestestet. Es handelte sich dabei um die folgende erfindungsgemäße Rezeptur sowie eine Nullmischung als Referenz, wobei die beiden Massen mit 250 Kg Feststoff/m³ Masse bzw. Suspension niedriggefüllt sind:

| **Komponenten** | **Erf.-gem. Mischung** | **Vergleichsmischung** |
|---|---|---|
| Übliche Dichtwandmasse | 99,0 | 100,0 |
| Zellulosefasern | 1,0 | - |

Beide Rezepturen wurden im Hinblick auf Frischrheologie, Druckfestigkeit und Durchlässigkeit bei 20°C im Labor geprüft:

| **Produkt** | **Erfindungsgemäße Mischung** | | **Mischung ohne Holzfasern** | |
|---|---|---|---|---|
| **Feststoffgehalt** | **250 kg/m**^{**3**} | | **250 kg/m**^{**3**} | |
| Bodeneintrag (Vol.-%) | 0 | Sand 15 | 0 | Sand 15 |
| Marshzeit (s/l) | 33,5 | 34,0 | 34,0 | 34,5 |
| Fließgrenze (Kugel) | 5 | 5 | 5 | 5 |
| Absetzmaß 2 h (Vol.-%) | 0,7 | 1,1 | 0,9 | 1,2 |
| Filtratwasser (ml) | 55 | 46 | 53 | 45 |
| Cu 24 h (kN/m²) | 28,8 | 42 | - | - |
| Cu 48 h (kN/m²) | 76,1 | 120,1 | 89,7 | >100 |
| 3 d Prismen (N/mm²) | 0,36 | 0,39 | - | - |
| 7 d Prismen (N/mm²) | - | - | 1,05 | 0,93 |
| 14 d Prismen (N/mm²) | 1,14 | 1,49 | 1,52 | 1,60 |
| 28 d Prismen (N/mm²) | 1,64 | 2,06 | 1,61 | 2,00 |
| qᵤ 14 d (N/mm²) | 1,02 | 1,19 | 1,15 | 1,18 |
| qᵤ 28 d (N/mm²) | 1,28 | 1,67 | 1,14 | 1,48 |
| k_{f} 28 d (m/s) | 2,8 E-1 | 3,6 E-1 | 9,1 E-1 | 2,6 E-1 |

Die beiden Mischungen mit Sandeintrag wurden in je einen Rahmen eingefüllt, der rückseitig wassergesättigten Sand enthielt. Damit sollten die Baustellenbedingungen ansatzweise nachempfunden werden. Etwa 14 Tage nach Herstellung der Probekörper wurde die Dichtwandmasse freigelegt und die Rahmen über ca. 6 Wochen bei 15 °C und normaler Luftfeuchtigkeit in einem Keller gelagert. Dabei wurde der Sand in der Form hinter den Probekörpern nicht weiter befeuchtet. Das Austrocknungsverhalten (d.h. gerissenes Material bis zum Erreichen des homogenen dunkelblauen Dichtwandmaterials) stellte sich wie folgt dar:

| **Alter** | **Mit Zellulose** | **Ohne Zellulose** |
|---|---|---|
| 7 d | 4mm | 8mm |
| 21 d | 5mm | 20mm |
| 42 d | gleichmäßig 20mm | 20-50mm |

Im Ergebnis dieses Versuchs ist festzuhalten, dass in der erfindungsgemäßen Mischung bzw. daraus hergestellten Massen das Austrocknen der Dichtwandmasse offenbar verlangsamt und vergleichmäßigt wird.

Auffällig war, das beim rückseitigen Öffnen der Formen der Sand bei der Referenzmischung feucht und klumpig war, während bei dem mit Zellulose hergestellte Probekörper trockner rieselfähiger Sand vorlag. Es ist also zu vermuten, dass die Holzcellulose neben dem aufgefundenen überragenden Wasserrückhaltevermögen aktiv Feuchtigkeit dem anstehenden Boden (in diesem Fall dem feuchten Sand hinter dem Probekörper) entzieht. Hierdurch ist eine solche Mischung grundsätzlich auch dafür geeignet, Baugrubenumschließungen mit bis zu 5m hoch anstehendem Grundwasser ohne wesentliches Austrocknen der Masse herstellen zu können.

Tiefere Baugruben mit höheren Wasserständen haben eine Mindestanforderung für die Druckfestigkeit im Bereich von 3N/mm².

Für eine derartige Anwendung ist die erfindungsgemäße Rezeptur mit bis zu 400kg/m³ Feststoffanteil geeignet. In Versuchen wurde die Prismendruckfestigkeit für einen Feststoffgehalt von 350 kg/m³ ermittelt. Die Prismendruckfestigkeit nach 14 Tagen betrug bereits 2,58 N/mm², sodass sich insgesamt eine Zylinderdruckfestigkeit von ß_{D28} > 3 N/mm² einstellte.

Insgesamt wird mit den vorgenannten erfindungsgemäßen Baustoffmischungen die Herstellung eines zu wenig Austrocknung neigenden Baugrubenverbaus möglich, dessen technische Eigenschaften sich von den herkömmlichen Einphasendichtwandmassen unterscheiden.

Vorteilhaft ist, dass der erfindungsgemäße Baugrubenverbau im Winter anwendbar ist, weil die Masse trotz des sehr hohen Wasseranteils frostbeständig ist. Die Frostbeständigkeit liegt deutlich über derjenigen bekannter Massen, da in den Fasern eingebundenes Wasser vor dem Einfrieren geschützt ist und zudem die Fasern die Masse gegen mechanische Spannungen durch Frost stabilisieren, wobei das in den Fasern intern gebundene Wasser beim Gefrieren durch die Elastizität der Fasern keine Schäden verursacht. Nach der Erfindung gelingt es somit, eine für den Baugrubenverbau verwendbare Einphasenschlitzwandmasse zur Verfügung zu stellen, die allen Anforderungen während der Bauphase von z. B. drei bis zwölf Monaten optimal genügt.

## Patentansprüche

1. Verwendung von quellenden und langzeitig wasserspeichernden Holzfasern mit einer Länge von 0,1 bis 10 mm, die bei Wasseraufnahme vernetzen, in einem eine hydraulische Bindemittelkomponente und eine Tonkomponente enthaltenden Baustoffgemenge in Mengen von 0,2 bis 6 Masse % zur Herstellung einer Schlitzwand- oder einer Dichtwandmasse mit einem Feststoffanteil unter 400 kg/m³.

2. Verwendung nach Anspruch 1,
dadurch gekennzeichne t,
dass als Bindemittelkomponente Zement, insbesondere Portlandzement oder Hochofenzement verwendet wird.

3. Verwendung nach Anspruch 1 und/oder 2,
**dadurch gekennzeichnet,**
**dass** eine gemahlenen Hüttensand enthaltende Bindemittelkomponente verwendet wird.

4. Verwendung nach einem oder mehreren der Ansprüche 1 bis 3,
**dadurch gekennzeichnet,**
**dass** als Tonkomponente Bentonit oder kaolinitische Tone verwendet werden.

5. Verwendung nach einem oder mehreren der Ansprüche 1 bis 4,
**dadurch gekennzeichnet,**
**dass** im Baustoffgemenge ein anorganisches hygroskopisch wirkendes Zusatzmittel oder mindestens ein anorganisches Zusatzmittel, das hygroskopische Mittel in der Masse bildet, verwendet wird.

6. Verwendung nach Anspruch 5,
**dadurch gekennzeichnet,**
**dass** die Mittel in Mengen von 0,01 bis 10 Masse %, vorzugsweise in Mengen von 0,05 bis 2 Masse % verwendet werden.

7. Verwendung nach einem oder mehreren der Ansprüche 1 bis 6,
**dadurch gekennzeichnet,**
**dass** zur Erhöhung des Wasserrückhaltevermögens der Masse im Baustoffgemenge Celluloseäther, insbesondere in Mengen von 0,01 bis 0,2, vorzugsweise von 0,05 bis 0,1 Masse % verwendet werden.

8. Verwendung nach einem oder mehreren der Ansprüche 1 bis 7,
**dadurch gekennzeichnet,**
**dass** im Baustoffgemenge anorganische oder organische Zusatzmittel zur Beeinflussung der Viskosität oder der Festigenschaften und des Erhärtungsverlaufs verwendet werden.

9. Verwendung nach Anspruch 8,
**dadurch gekennzeichnet,**
**dass** im Baustoffgemenge verflüssigende organische oder anorganische Zusatzmittel wie Ligninsulfonate, Polynaphtalinsulfonate, Polymelaminsulfonate, Zuckerderivate, Hydroxycarboxylsäuren oder Polyacrylsäuren verwendet werden.

10. Verwendung nach Anspruch 8 und/oder 9,
**dadurch gekennzeichnet,**
**dass** im Baustoffgemenge erhärtungsverzögernde organische oder anorganische Zusatzmittel wie Ligninsulfonate, Zuckerderivate, Cellulosederivate, Hydroxycarboxylsäuren, Salze der Bor-, Phosphor- und/oder Salzsäure oder Metalloxyde verwendet werden.

11. Verwendung nach einem oder mehreren der Ansprüche 8 bis 10,
**dadurch gekennzeichnet,**
**dass** im Baustoffgemenge erhärtungsbeschleunigende organische oder anorganische Zusatzmittel wie Salze der Schwefel-, Salz-, Kohlen- und Kieselsäure, Salze der Ameisensäure, Oxalsäure, alkalische Basen oder Amine verwendet werden.

12. Verwendung nach einem oder mehreren der Ansprüche 1 bis 11,
**dadurch gekennzeichnet,**
**dass** im Baustoffgemenge filtratverlustreduzierende organische oder anorganische Zusatzmittel wie Latex, Cellulosederivate, Polyacrylamidderivate, Alkalisalze, Alkalisilikate, Polyvinylalkohol, Polyethylenamine, Polynaphtalinsulfonate oder Zuckerderivate verwendet werden.

13. Verwendung nach einem oder mehreren der Ansprüche 1 bis 12,
**dadurch gekennzeichnet,**
das im Baustoffgemenge suspensionsstabilisierende und/oder verdickende organische oder anorganische Zusatzmittel wie Tonmehle, Alkalisilikate, amorphe und kristalline Quarzmehle oder Quarzstäube, Perlite, Kohlenstaub, Flugasche und Elektrofilterstäube, gemahlene natürliche Puzzolane, Prozeßstäube und/oder Cellulosederivate verwendet werden.

14. Verwendung nach einem oder mehreren der Ansprüche 1 bis 13,
**dadurch gekennzeichnet,**
**dass** im Baustoffgemenge Füllstoffe in Form von Gesteinsmehlen wie Traßmehl, Zeolite, Vermiculit oder künstliche Mineralmehle wie Flugaschen oder Microsilica verwendet werden.

## Claims

1. Use of swelling and long-term water-storing wood fibres with a length of 0.1 to 10 mm, which crosslink on absorption of water, in a building material mixture containing a hydraulic binder component and a clay component in quantities of 0.2 to 6 weight % for the preparation of an underground curtain wall or a retention wall compound with a solids content less than 400 kg/m³.

2. Use according to Claim 1, **characterized in that** cement, in particular Portland cement or blast furnace slag cement, is used as the binder component.

3. Use according to Claim 1 and/or 2, **characterized in that** a binder component containing ground slag sand is used.

4. Use according to one or more of Claims 1 to 3, **characterized in that** bentonite or kaolinitic clay is used as the clay component.

5. Use according to one or more of Claims 1 to 4, **characterized in that** an inorganic additive with hygroscopic action or at least one inorganic additive which forms hygroscopic agents in the compound is used in the building material mixture.

6. Use according to Claim 5, **characterized in that** the agents are used in quantities of 0.01 to 10 weight %, preferably in amounts of 0.05 to 2 weight %.

7. Use according to one or more of Claims 1 to 6, **characterized in that** to increase the water retention capacity of the compound in the building material mixture, cellulose ethers are used, in particular in quantities of 0.01 to 0.2, preferably of 0.05 to 0.1 weight %.

8. Use according to one or more of Claims 1 to 7, **characterized in that** inorganic or organic additives are used in the building material mixture to influence the viscosity or the solid properties and the setting process.

9. Use according to Claim 8, **characterized in that** liquefying organic or inorganic additives such as ligninsulphonates, polynaphthalenesulphonates, polymelaminesulphonates, sugar derivatives, hydroxycarboxylic acids or polyacrylic acids are used in the building material mixture.

10. Use according to Claim 8 and/or 9, **characterized in that** setting-retarding organic or inorganic additives such as ligninsulphonates, sugar derivatives, cellulose derivatives, hydroxycarboxylic acids, salts of boric, phosphoric and/or hydrochloric acid or metal oxides are used in the building material mixture.

11. Use according to one or more of Claims 8 to 10, **characterized in that** setting-accelerating organic or inorganic additives such as salts of sulphuric, hydrochloric, carbonic and silicic acid, salts of formic acid, oxalic acid, alkaline bases or amines are used in the building material mixture.

12. Use according to one or more of Claims 1 to 11, **characterized in that** filtrate loss-reducing organic or inorganic additives such as latex, cellulose derivatives, polyacrylamide derivatives, alkali metal salts, alkali metal silicates, polyvinyl alcohol, polyethyleneamines, polynaphthalenesulphonates or sugar derivatives are used in the building material mixture.

13. Use according to one or more of Claims 1 to 12, **characterized in that** suspension-stabilising and/or thickening organic or inorganic additives such as powdered clays, alkali metal silicates, amorphous and crystalline quartz powders or quartz dusts, perlites, carbon dust, fly ash and electrostatic filter dusts, ground natural pozzolans, process dusts and/or cellulose derivatives are used in the building material mixture.

14. Use according to one or more of Claims 1 to 13, **characterized in that** fillers in the form of rock powders such as powdered trass, zeolites, vermiculite or artificial mineral powders such as fly ashes or microsilica are used in the building material mixture.

## Revendications

1. Utilisation de fibres creuses qui gonflent et qui accumulent l'eau pendant une longue période, présentant une longueur de 0,1 à 10 mm, qui réticulent lors de l'absorption d'eau, dans un mélange pour matériau de construction contenant un composant liant hydraulique et un composant argileux en des quantités de 0,2 à 6% en masse pour la préparation d'une masse pour rideau souterrain ou pour rideau étanche présentant une proportion de solides inférieure à 400 kg/m³.

2. Utilisation selon la revendication 1, **caractérisée en ce qu'**on utilise comme composant liant du ciment, en particulier le ciment Portland ou le ciment de haut-fourneau.

3. Utilisation selon la revendication 1 et/ou 2, **caractérisée en ce qu'**on utilise un composant liant contenant du laitier granulé broyé.

4. Utilisation selon l'une ou plusieurs des revendications 1 à 3, **caractérisée en ce qu'**on utilise de la bentonite ou des argiles kaolinitiques comme composants d'argile.

5. Utilisation selon l'une ou plusieurs des revendications 1 à 4, **caractérisée en ce qu'**on utilise dans le mélange pour matériau de construction un additif inorganique à effet hygroscopique ou au moins un additif inorganique qui forme des agents hygroscopiques dans la masse.

6. Utilisation selon la revendication 5, **caractérisée en ce que** l'agent est utilisé en des quantités de 0,01 à 10% en masse, de préférence en des quantités de 0,05 à 2% en masse.

7. Utilisation selon l'une ou plusieurs des revendications 1 à 6, **caractérisée en ce que**, pour l'augmentation du pouvoir de rétention d'eau de la masse, on utilise dans le mélange pour matériau de construction des éthers de cellulose, en particulier en des quantités de 0,01 à 0,2, de préférence de 0,05 à 0,1% en masse.

8. Utilisation selon l'une ou plusieurs des revendications 1 à 7, **caractérisée en ce qu'**on utilise dans le mélange pour matériau de construction des additifs inorganiques ou organiques pour influencer la viscosité ou les propriétés de résistance et l'évolution du durcissement.

9. Utilisation selon la revendication 8, **caractérisée en ce qu'**on utilise dans le mélange pour matériau de construction des additifs fluidifiants organiques ou inorganiques tels que les ligninesulfonates, les polynaphtalènesulfonates, les polymélaminesulfonates, les dérivés du sucre, les acides hydroxycarboxyliques ou les poly(acides acryliques).

10. Utilisation selon la revendication 8 et/ou 9, **caractérisée en ce qu'**on utilise dans le mélange pour matériau de construction des additifs organiques ou inorganiques ralentissant le durcissement, tels que les ligninesulfonates, les dérivés du sucre, les dérivés de cellulose, les acides hydroxycarboxyliques, les sels de l'acide borique, phosphorique et/ou chlorhydrique ou les oxydes métalliques.

11. Utilisation selon l'une ou plusieurs des revendications 8 à 10, **caractérisée en ce qu'**on utilise dans le mélange pour matériau de construction des additifs organiques ou inorganiques accélérant le durcissement, tels que les sels de l'acide sulfurique, chlorhydrique, carboxylique et la silice, les sels de l'acide formique, l'acide oxalique, les bases ou les amines alcalines.

12. Utilisation selon l'une ou plusieurs des revendications 1 à 11, **caractérisée en ce qu'**on utilise dans le mélange pour matériau de construction des additifs organiques ou inorganiques réduisant la perte par filtration, tels que le latex, les dérivés de cellulose, les dérivés de polyacrylamide, les sels alcalins, les silicates alcalins, le poly(alcool vinylique), les polyéthylèneamines, les polynaphtalènesulfonates ou les dérivés du sucre.

13. Utilisation selon l'une ou plusieurs des revendications 1 à 12, **caractérisée en ce qu'**on utilise dans le mélange pour matériau de construction des additifs organiques ou inorganiques de stabilisation de la suspension et/ou épaississants, tels que les poudres d'argile, les silicates alcalins, les poudres ou poussières de quartz amorphes et cristallines, les perlites, la poudre de charbon, les cendres volantes et les poussières d'électrofiltre, les pouzzolanes naturelles broyées, les poussières résiduelles de procédé et/ou les dérivés de cellulose.

14. Utilisation selon l'une ou plusieurs des revendications 1 à 13, **caractérisée en ce qu'**on utilise dans le mélange pour matériau de construction des charges sous forme de poudres de roche, telles que la poudre de trass, les zéolithes, la vermiculite ou les poudres minérales synthétiques telles que les cendres volantes ou les microsilices.
